# EUROPEAN PATENT APPLICATION

(11) **EP 2 533 607 A2**
(43) Date of publication of application: **12.12.2012**
(21) Application number: 12170859.8
(22) Date of filing: 05.06.2012
(51) Int. Cl.: H05B 33/08

(54) **Light emitting apparatus**

(30) Priority: 08.06.2011 TW 100120012
(71) Applicant: GIO Optoelectronics Corp., Tainan City 74148 (TW)
(72) Inventor: Lin, Chung-Jyh, 710 Tainan City (TW); Yang, Wu-Chang, 74148 Tainan City (TW)
(74) Representative: 2K Patentanwälte Blasberg Kewitz & Reichel

(57) **Abstract**

A light emitting apparatus (2) receives an external power and includes a light-emitting unit (21), two rectifiers (22,23), a first electrical connection element (24) and a second electrical connection element (25). Each of the rectifiers has a first input terminal (221,231), a second input terminal (222,232), an output terminal (223,233) and a ground terminal (224,234). The output terminals are electrically connected together and are electrically connected with the light-emitting unit. The first electrical connection element is electrically connected with the external power and the first input terminals. The second electrical connection element is electrically connected with the external power and the second input terminals. The light emitting apparatus can replace the traditional fluorescent tube without changing the circuit of the lighting.

## Description

### BACKGROUND OF THE INVENTION

### Field of Invention

The present disclosure relates to a light emitting apparatus and, in particular, to a light emitting apparatus with LEDs.

### Related Art

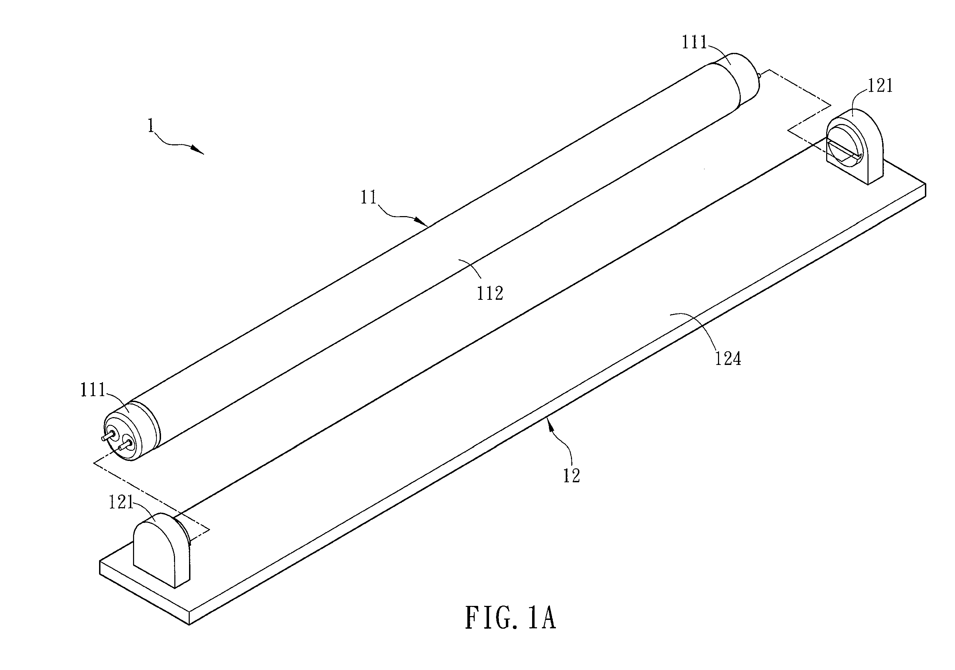

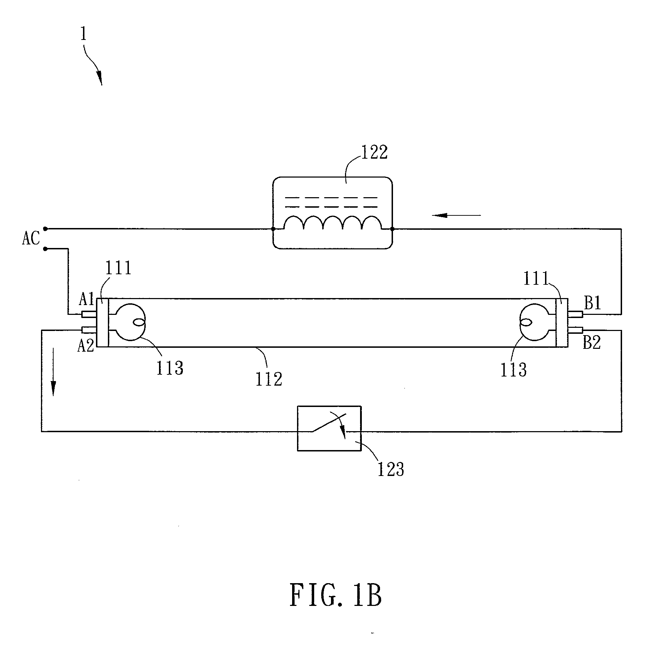

FIGS. 1A and 1B are respectively a schematic diagram and a circuit diagram of a conventional fluorescent lamp 1. The fluorescent lamp 1 is a tool for converting electricity into light.

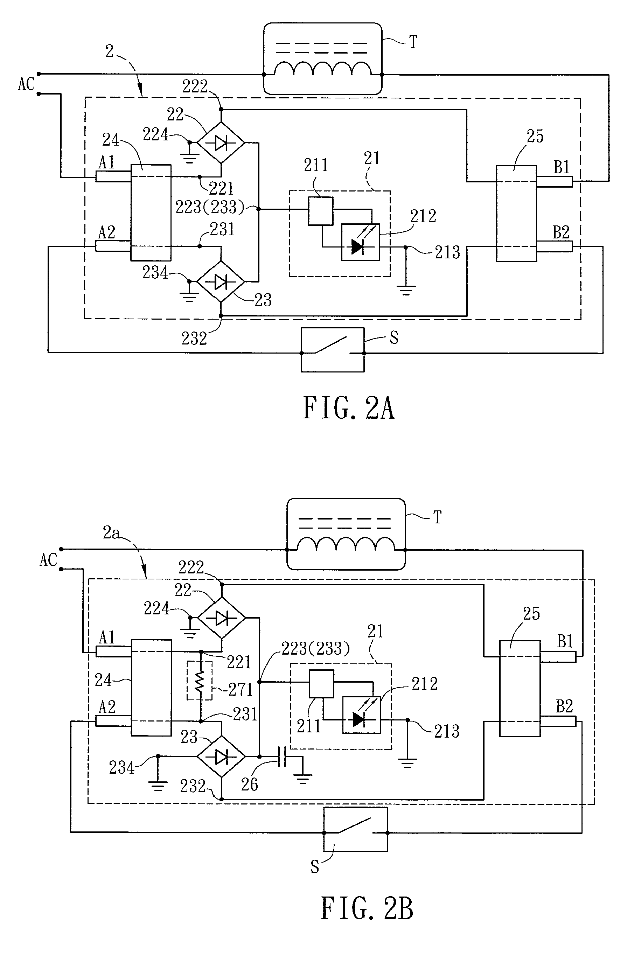

The fluorescent lamp 1 includes a fluorescent tube 11 and a lamp base 12. The fluorescent tube 11 includes two electrical connection elements 111 and a tube 112, and the lamp base 12 includes two lamp sockets 121, a ballast 122, a starter 123, and a base body 124. To be noted, FIG. 1A does not show the ballast 122 and the starter 123, and FIG. 2B does not show the lamp sockets 121 and the base body 124. The lamp sockets 121 are disposed at two ends of the base body 124, and the ballast 122 and the starter 123 are disposed in the base body 124. The two electrical connection elements 111 of the fluorescent tube 11 are respectively installed in two lamp sockets 121, so that the proper AC power can be applied to the fluorescent lamp 1 so as to light the fluorescent tube 11.

Referring to FIG. 1B, when switching on to apply the AC power to the fluorescent tube 11, the initial voltage is not sufficient to enable the fluorescent tube 11 to generate gas discharge, so a loop of current is designed to heat the filament 113. In the loop, the current from the AC power flows through the first electrode A1, the filament 113 and the second electrode A2 of the left electrical connection element 111, passes the starter 123 (the starter 123 may sense a temporary short circuit of the voltage), and the second electrode B2, the filament 113 and the first electrode B1 of the right electrical connection element 111, and returns the external power AC through the ballast 122.

After the starter 123 is shorted and opened, the sudden open circuit allows the inductance of the ballast 122 to cause a high voltage at two ends of the fluorescent tube 11, so that the heated filament 113 can release a great amount of electrons. The electrons collide with gas atoms in the tube 112, so that the gas atoms are ionized to release more electrons, which can continuously collide with other gas atoms. These electrons can excite the mercury vapor inside the tube 112 to emit ultraviolet light, and the lamp's interior fluorescent coating absorbs the ultraviolet light and emits the visible light with longer wavelength. Accordingly, the current in the lamp is established so as to light the fluorescent lamp 1, in which a loop including the first electrode A1, the filament 113, the tube 112, the filament 113, the first electrode B1 and the ballast 122, is formed. Herein, after the fluorescent tube 11 is lighted on, the voltage between two ends of the fluorescent tube 11 is decreased, so that the starter 113 is remained in the open state. The ballast 112 can control the current of the fluorescent tube 11 below a safe current, thereby preventing the fluorescent lamp 1 from being burnt due to the excess current. The ballast 122 can be a traditional ballast or an electronic ballast for controlling the current of the fluorescent lamp below the safe current, herein the electronic ballast refers to an electronic-circuit type driver with active components which generates high voltages to drive the fluorescent lamp 1.

In the recent years, since the manufacturing processes and materials of the LEDs are continuously improved, the illumination efficiency of the LED is sufficiently enhanced. Different from the conventional fluorescent lamp or compact fluorescent lamp, the LED has the properties of lower power consumption, environment friendly, longer life, higher safety, shorter lighting response time, and smaller size, so it has been widely applied to various kinds of electronic products. One of the applications is to fabricate a light emitting apparatus with LEDs that has the same appearance as the conventional fluorescent lamp, so that it can directly replace the conventional fluorescent lamp.

However, when using the light emitting apparatus with LEDs of the same appearance (also called LED lamp) to replace the fluorescent tube 11 cooperating with the conventional ballast, it is hard to confirm that which end of the filament is connected to the power source. In order to retrieve the power source around any of the two ends of the original filament, it is usually to short the two ends of the original filament. As the LED lamp is not turned on, the inputted voltage allows the starter 123 to generate the temporary short circuit. In this case, since the filament is shorted, the starter 123 may be burned without the protection of the filament resistance. Accordingly, it is necessary to remove the starter 123 before replacing the conventional fluorescent tube by the LED lamp so as to prevent the short circuit and burnout of the starter 123.

In addition, when using the LED lamp of the same appearance to replace the fluorescent tube 11 cooperating with the conventional electronic ballast, the electronic ballast will still detect whether the filament exists or not. Since the LED lamp does not have any filament, it is necessary to remove the electronic ballast and change the circuit design. If not, the light emitting apparatus or the electronic ballast may be burned or may not function normally.

Therefore, it is an important subject of the present invention to provide a light emitting apparatus that can directly replace the conventional fluorescent tube without changing the circuit of the lighting.

### SUMMARY OF THE INVENTION

In view of the foregoing subject, an objective of the present invention is to provide a light emitting apparatus that can directly replace the conventional fluorescent tube without changing the circuit of the lighting.

To achieve the above objective, the present invention discloses a light emitting apparatus, which receives an external power and includes a light-emitting unit, two rectifiers, a first electrical connection element and a second electrical connection element. Each of the rectifiers has a first input terminal, a second input terminal, an output terminal and a ground terminal. The output terminals are electrically connected together and are electrically connected with the light-emitting unit. The first electrical connection element is electrically connected with the external power and the first input terminals. The second electrical connection element is electrically connected with the external power and the second input terminals.

In one embodiment of the invention, the first electrical connection element has two electrical input terminals, and the second electrical connection element has two electrical input terminals.

In one embodiment of the invention, the external power is applied to the electrical input terminals of the first and second electrical connection elements.

In one embodiment of the invention, the light-emitting unit has a light-emitting module and a control module. The light-emitting module comprises a plurality of LEDs, and the control module controls the number of the LEDs of the light-emitting module to be turned on.

In one embodiment of the invention, each of the rectifiers is a bridge rectifier.

In one embodiment of the invention, the light emitting apparatus further comprises at least a filtering element electrically connected with the output terminals.

In one embodiment of the invention, the light emitting apparatus further comprises at least one impedance element electrically connected with two electrical input terminals of the first or second electrical connection element.

In one embodiment of the invention, when the number of the impedance elements is two, one of the impedance elements is electrically connected with two electrical input terminals of the first electrical connection element, and the other one is electrically connected with two electrical input terminals of the second electrical connection element.

In one embodiment of the invention, the light emitting apparatus further comprises at least one impedance element. One end of the impedance element is electrically connected with the output terminals, and another end thereof is electrically connected with the ground terminal.

In one embodiment of the invention, the impedance element is a variable impedance element or a partial circuit of the light-emitting unit.

To achieve the above objective, the present invention also discloses a light emitting apparatus, which receives an external power and includes a light-emitting unit, at least a rectifier, a first electrical connection element, a second electrical connection element and at least an impedance element. The rectifier has a first input terminal, a second input terminal, an output terminal and a ground terminal. The output terminal is electrically connected with the light-emitting unit. The first electrical connection element has two electrical input terminals and is electrically connected with the external power and the first input terminal. The second electrical connection element has two electrical input terminals and is electrically connected with the external power and the second input terminal. The impedance element electrically connected with the two electrical input terminals of the first electrical connection element or the second electrical connection element, or electrically connected with the output terminal and the ground terminal.

In one embodiment of the invention, the external power is applied to the electrical input terminals of the first and second electrical connection elements.

In one embodiment of the invention, the light-emitting unit has a light-emitting module and a control module. The light-emitting module comprises a plurality of LEDs, and the control module controls the number of the LEDs of the light-emitting module to be turned on.

In one embodiment of the invention, the rectifier is a bridge rectifier.

In one embodiment of the invention, the light emitting apparatus further comprises at least a filtering element electrically connected with the output terminal.

In one embodiment of the invention, when the number of the impedance elements is two, one of the impedance elements is electrically connected with the two electrical input terminals of the first electrical connection element, and the other one is electrically connected with the two electrical input terminals of the second electrical connection element.

In one embodiment of the invention, the impedance element is a variable impedance element, a partial or entire circuit of the light-emitting unit, a partial or entire circuit of the rectifier, or an AC LED module.

In one embodiment of the invention, the light emitting apparatus further comprises a switch unit connected with the light-emitting unit in series. When the first and second electrical connection elements both receive the external power, the switch unit is turned on.

In one embodiment of the invention, when the light-emitting unit is lighted on, the switch unit is continuously turned on.

In one embodiment of the invention, the light emitting apparatus further comprises a control unit electrically connected with the light-emitting unit for controlling the switch unit according to the lighting status of the light-emitting unit.

In one embodiment of the invention, the light-emitting unit or the rectifier comprises an AC LED module.

In one embodiment of the invention, the AC LED module has a plurality of LEDs connected in series or in parallel.

As mentioned above, the light emitting apparatus of the invention is a LED lamp, which does not have the filament of the conventional fluorescent lamp. The light emitting apparatus uses internal elements for simulating the filament, so that the starter and ballast of the conventional fluorescent lamp can still operate with the light emitting apparatus normally. Compared with the conventional art, when the conventional fluorescent lamp is replaced by the light emitting apparatus of the invention, it is possible to prevent the traditional ballast from being burned, or to avoid the procedure of removing the electronic ballast and changing the original circuit. Therefore, as the light emitting apparatus of the invention is installed on the conventional fluorescent lamp base, it can directly replace the conventional fluorescent lamp tube without changing the circuit of the lamp base.

### BRIEF DESCRIPTION OF THE DRAWINGS

The invention will become more fully understood from the detailed description and accompanying drawings, which are given for illustration only, and thus are not limitative of the present invention, and wherein:

FIGS. 1A and 1B are respectively a schematic diagram and a circuit diagram of a conventional fluorescent lamp;

FIG. 2A is a circuit diagram of a light emitting apparatus according to a preferred embodiment of the invention;

FIGS. 2B to 2H and 3A to 3B are circuit diagrams showing different aspects of the light emitting apparatus of the invention;

FIG. 4A is a circuit diagram of a light emitting apparatus according to another preferred embodiment of the invention; and

FIGS. 4B to 4E and 5A to 5E are circuit diagrams showing different aspects of the light emitting apparatus of the invention.

### DETAILED DESCRIPTION OF THE INVENTION

The present invention will be apparent from the following detailed description, which proceeds with reference to the accompanying drawings, wherein the same references relate to the same elements.

FIG. 2A is a circuit diagram of a light emitting apparatus 2 according to a preferred embodiment of the invention. To be noted, the light emitting apparatus 2 of the invention is compatible with the conventional fluorescent lamp base with the traditional ballast or electronic ballast, and can be applied to replace the conventional fluorescent tube. Besides, in order to replace the conventional fluorescent tube, the appearance of the light emitting apparatus 2 is fabricated the same as that of the conventional fluorescent tube, so that it can fit the lamp sockets of the conventional lamp base. In order to illustrate the principle of the light emitting apparatus 2, the circuit diagram of FIG. 2A shows the traditional ballast T and starter S of the conventional fluorescent lamp.

The light emitting apparatus 2 receives an external power AC, such as the mains. For example, the voltage of the external power AC is 110V AC or 220V AC, and the frequency thereof is 50 Hz, 60 Hz or their multiples. Or, the external power AC can be a high-frequency alternating current power.

The light emitting apparatus 2 includes a light-emitting unit 21, two rectifiers 22 and 23, a first electrical connection element 24, and a second electrical connection element 25.

The light-emitting unit 21 includes a control module 211 and a light-emitting module 212. The light-emitting module 212 includes a plurality of LEDs, which can be connected in series, in parallel or in both series and parallel. To be noted, although the drawings only show a single LED, the actual light-emitting module 212 may include a plurality of LEDs in application. Hereinafter, the light emitting apparatus with the LEDs is generally named as LED tube.

In addition, the control module 211 is electrically connected with the light-emitting module 212 for controlling the number of the LEDs of the light-emitting module 212 to be turned on. The control module 211 and the light-emitting module 212 can be connected in series or in parallel. Alternatively, parts of the control module 211 and the light-emitting module 212 are connected in series, and the other parts of them are connected in parallel. The control module 211 may detect the voltage of the node between the LEDs of the light-emitting module 212, the parameter representing the illumination status of the light-emitting module 212, or the operation status of the light-emitting module 212 and the illumination status of the light-emitting unit 21, so as to turn on different numbers of the LEDs. Accordingly, it is possible to operate based on different input voltages to increase the efficiency of the input power.

As shown in FIG. 2A, each of the rectifiers 22 and 23 is a bridge rectifier. In this case, the rectifiers 22, 23 respectively include first input terminals 221, 231, second input terminals 222, 232, a common output terminal 223 (233), and ground terminals 224, 234. The output terminal(s) 223 (233) are electrically connected with the light-emitting unit 21.

The first electrical connection element 24 is electrically connected with the external power AC and the first output terminals 221, 231. In this embodiment, the first electrical connection element 24 has two electrical input terminals, which are a first electrode A1 and a second electrode A2. The external power AC respectively supplies power to the two electrical input terminals of the first electrical connection element 24 and the second electrical connection element 25. Two ends of the first electrode A1 are respectively connected to the external power AC and the first input terminal 221 of the rectifier 22. Two ends of the second electrode A2 are respectively connected to the starter S and the first input terminal 231 of the rectifier 23.

The second electrical connection element 25 is electrically connected with the external power AC and the second output terminals 222, 232. In this embodiment, the second electrical connection element 25 has two electrical input terminals, which are a first electrode B1 and a second electrode B2. Two ends of the second electrode B1 are respectively connected to the ballast T (and the external power AC) and the second input terminal 222 of the rectifier 22. Two ends of the second electrode B2 are respectively connected to the starter S and the second input terminal 232 of the rectifier 23.

When using the light emitting apparatus 2 to replace the conventional fluorescent tube connected with the traditional ballast, it is unnecessary to preheat the filament and perform the high voltage discharge because the light emitting apparatus 2 is configured without any filament. Thus, the light emitting apparatus 2 can be turned on as the voltage applied to the LED tube reaches a lower operation voltage. At this moment, the current flows from the external power AC, passes through the first electrode A1 of the first electrical connection element 24, the first input terminal 221 and the output terminal 223 of the bridge rectifier 22, the light-emitting unit 21, the ground terminal 213 of the light-emitting unit 21, the ground terminal 224 and the second input terminal 222 of the bridge rectifier 22, and the first electrode B1, and then returns to the external power AC through the ballast T. Accordingly, two ends of the starter S connected to the second electrodes A2 and B2 are isolated by the bridge rectifier 23, so the starter S can not sense the voltage. Thus, the starter S is keeping in the open circuit state.

Otherwise, when using the light emitting apparatus 2 to replace the conventional fluorescent tube connected with the electronic ballast, the electronic ballast may still detect whether the filament current exists or not. The invention provides four current paths for simulating the filament current loop, which flows between the first electrode A1 and the second electrode A2 of the first electrical connection element 24, between the first electrode A1 of the first electrical connection element 24 and the first electrode B1 of the second electrical connection element 25, between the first electrode A1 and the second electrode B2 of the second electrical connection element 25, and/or between the second electrode A2 of the first electrical connection element 24 and the second electrode B2 of the second electrical connection element 25.

When the filament current loop flows between the first electrode A1 and the second electrode A2 of the first electrical connection element 24, the current path includes the first electrode A1 of the first electrical connection element 24, the first input terminal 221, the output terminal 223, the light-emitting unit 21, the ground terminal 213, the ground terminal 234, the first input terminal 231, and the second electrode A2 of the first electrical connection element 24. When the filament current loop flows between the first electrode A1 of the first electrical connection element 24 and the first electrode B1 of the second electrical connection element 25, the current path includes the first electrode A1 of the first electrical connection element 24, the first input terminal 221, the output terminal 223, the light-emitting unit 21, the ground terminal 213, the ground terminal 224, the second input terminal 222, and the first electrode B1 of the second electrical connection element 25. When the filament current loop flows between the first electrode B1 and the second electrode B2 of the second electrical connection element 25, the current path includes the first electrode B1 of the second electrical connection element 25, the second input terminal 222, the output terminal 223, the light-emitting unit 21, the ground terminal 213, the ground terminal 234, the second input terminal 232, and the second electrode B2 of the second electrical connection element 25. When the filament current loop flows between the second electrode A2 of the first electrical connection element 24 and the second electrode B2 of the second electrical connection element 25, the current path includes the second electrode A2 of the first electrical connection element 24, the first input terminal 231, the output terminal 233, the light-emitting unit 21, the ground terminal 213, the ground terminal 234, the second input terminal 232, and the second electrode B2 of the second electrical connection element 25. Each of the above-mentioned current paths can form a simulated filament current loop. Thus, the entire light-emitting unit 21 can function as a variable impedance element (LED inherently has impedance), just like the filament of the conventional fluorescent tube.

In addition, the lamp current also includes four types of current paths, for example, between the first electrode A1 of the first electrical connection element 24 and the first electrode B1 of the second electrical connection element 25, between the first electrode A1 and the second electrode B2 of the second electrical connection element 25, between the second electrode A2 of the first electrical connection element 24 and the first electrode B1 of the second electrical connection element 25, or between the second electrode A2 of the first electrical connection element 24 and the second electrode B2 of the second electrical connection element 25.

When the lamp current flows between the first electrode A1 of the first electrical connection element 24 and the first electrode B1 (or the second electrode B2) of the second electrical connection element 25, the current path includes the first electrode A1 of the first electrical connection element 24, the first input terminal 221, the output terminal 223, the light-emitting unit 21, the ground terminal 213, the ground terminal 224 (or the ground terminal 234), the second input terminal 222 (or the second input terminal 232), and the first electrode B1 (or the second electrode B2) of the second electrical connection element 25. After the current passes through the light-emitting unit 21, the current automatically flows toward one of the first electrode B1 and the second electrode B2 of the second electrical connection element 25, depends on which one has lower impedance path. When the lamp current flows between the second electrode A2 of the first electrical connection element 24 and the second electrode B2 (or the first electrode B1) of the second electrical connection element 25, the current path includes the second electrode A2 of the first electrical connection element 24, the first input terminal 231, the output terminal 233, the light-emitting unit 21, the ground terminal 213, the ground terminal 234 (or the ground terminal 224), the second input terminal 232 (or the second input terminal 222), and the second electrode B2 (or the first electrode B1) of the second electrical connection element 25. After the current passes through the light-emitting unit 21, the current automatically flows toward one of the first electrode B1 and the second electrode B2 of the second electrical connection element 25, depends on which one has lower impedance path. Accordingly, the light emitting apparatus 2 can be lighted on normally.

As mentioned above, the light emitting apparatus 2 of the invention is a LED tube without the filament of the conventional fluorescent tube, and uses the light-emitting unit 21 to simulate the filament, so that the starter and ballast of the original lamp base can still function normally. Thus, when the conventional fluorescent lamp is replaced by the light emitting apparatus 2 of the invention, it prevents the traditional ballast from being burned, or avoids the procedure of removing the electronic ballast and changing the original circuit. Besides, as the light emitting apparatus 2 of the invention is installed on the conventional fluorescent lamp base, it can be lighted on normally.

FIGS. 2B to 2G are circuit diagrams showing different aspects of the light emitting apparatuses 2a to 2f. To be noted, in the following drawings except for FIG. 2B, the ballast T, starter S and external power of the conventional fluorescent lamp are not shown.

Different from the light emitting apparatus 2, the light emitting apparatus 2a of FIG. 2B further includes at least one filtering element 26. One end of the filtering element 26 is electrically connected with the output terminal 223 (233), and the other end thereof is grounded. In this case, the filtering element 26 is configured for filtering the power source of the light-emitting unit 21. In addition, the light emitting apparatus 2a may further include at least one impedance element, which is electrically connected with two electrical input terminals (the first electrode A1 and the second electrode A2) of the first electrical connection element 24, or two electrical input terminals (the first electrode B1 and the second electrode B2) of the second electrical connection element 25. The impedance element can be a resistor, an inductor, a capacitor, an active element, or the circuit composed of any of the previous or other components.

In this aspect, the light emitting apparatus 2a includes an impedance element 271, and two ends of the impedance element 271 are electrically connected with the first electrode A1 and the second electrode A2 of the first electrical connection element 24, respectively. In this case, the impedance element 271 is configured to simulate the filament. When connecting with the traditional ballast and starter, no filament current flows through the impedance element 271. Otherwise, when connecting to the electronic ballast, the filament current of the first electrical connection element 24 flows through the impedance element 271 located between the first electrode A1 and the second electrode A2, and the filament current of the second electrical connection element 25 flows between the first electrode B1 and the second electrode B2. The current loop includes the first electrode B1 of the second electrical connection element 25, the second input terminal 222, the output terminal 223, the light-emitting unit 21, the ground terminal 213, the ground terminal 234, the second input terminal 232, and the second electrode B2 of the second electrical connection element 25. The current direction of the LED tube is the same as that of the light emitting apparatus 2a, so the detailed description thereof will be omitted.

As mentioned above, the light emitting apparatus 2a uses the impedance element 271 to simulate the filament. Thus, when the conventional fluorescent lamp is replaced by the light emitting apparatus 2a of the invention, it is possible to prevent the traditional ballast from being burned, or avoid the procedure of removing the electronic ballast and changing the original circuit. Besides, as the light emitting apparatus 2a of the invention is installed on the conventional fluorescent lamp base, it can be lighted on normally.

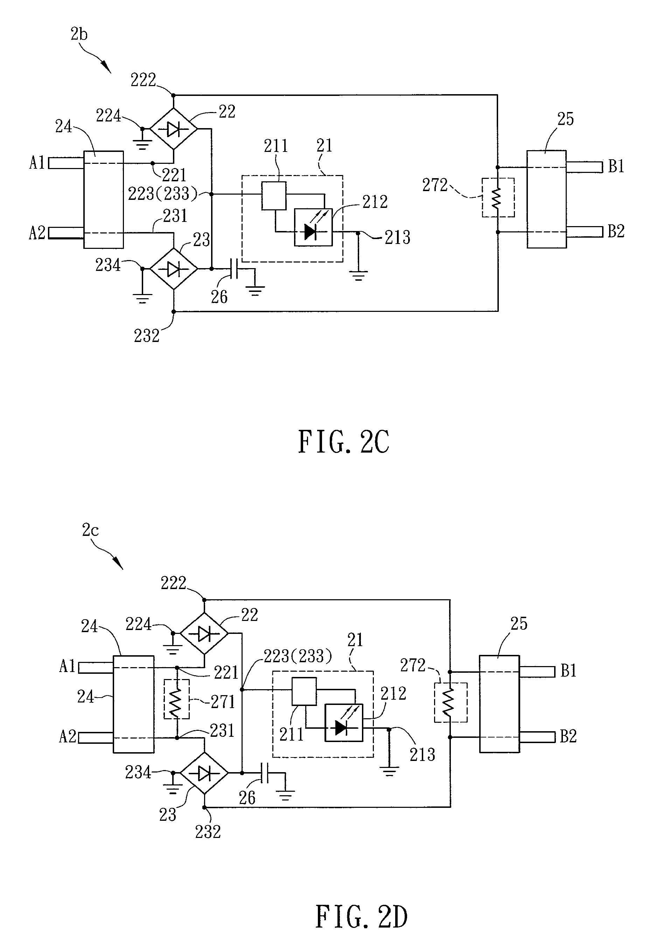

Different from the light emitting apparatus 2a, as shown in FIG. 2C, two ends of the impedance element 272 of the light emitting apparatus 2b are electrically connected with the first electrode B1 and the second electrode B2 of the second electrical connection element 25. The impedance element 272 of the light emitting apparatus 2b can also be configured to simulate the filament. The current loops of the filament and the lamp can be referred to the above light emitting apparatus 2a, so the detailed description thereof will be omitted.

Different from the light emitting apparatus 2a, the light emitting apparatus 2c of FIG. 2D includes two impedance elements 271 and 272. Two ends of the impedance element 271 are electrically connected with the first electrode A1 and the second electrode A2 of the first electrical connection element 24, and two ends of the impedance element 272 are electrically connected with the first electrode B1 and the second electrode B2 of the second electrical connection element 25. Both of the impedance elements 271 and 272 of the light emitting apparatus 2c can be configured to simulate the filament. The current loops of the filament and the lamp can be referred to the above light emitting apparatus 2a, so the detailed description thereof will be omitted.

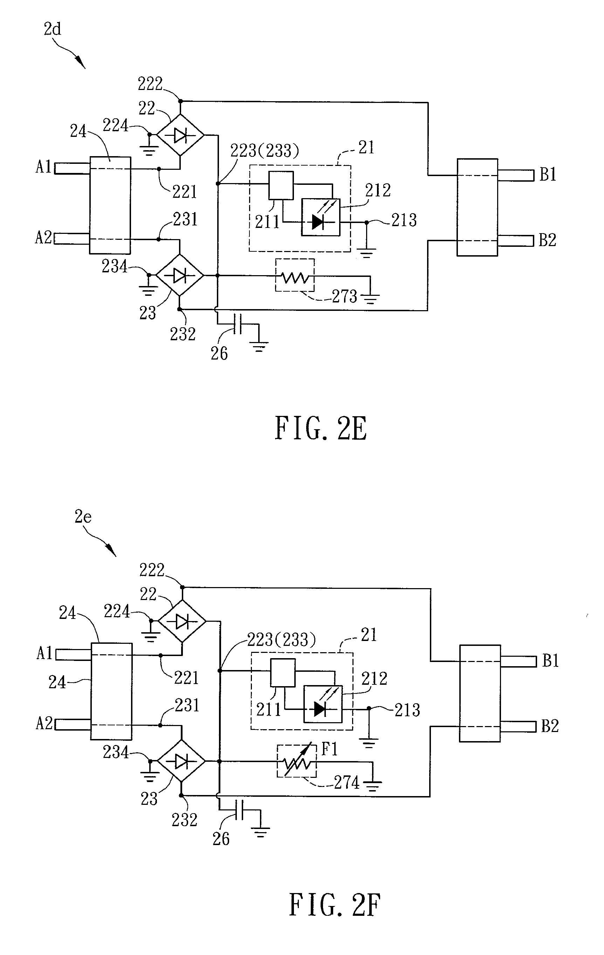

Different from the light emitting apparatus 2a, the light emitting apparatus 2d of FIG. 2E includes an impedance element 273. One end of the element 273 is electrically connected with the output terminals 223 (233), and the other end thereof is grounded. The impedance element 273 of the light emitting apparatus 2d can be configured to simulate the filament. The current loops of the filament and the lamp can be referred to the above light emitting apparatus 2a, so the detailed description thereof will be omitted.

Different from the light emitting apparatus 2d, as shown in FIG. 2F, the impedance element 274 of the light emitting apparatus 2e is a variable impedance element. One end of the element 274 is electrically connected with the output terminals 223 (233), and the other end thereof is grounded. The impedance element 274 of the light emitting apparatus 2e can be configured to simulate the filament. Under low voltage, the impedance element 274 has low impedance for providing the filament current to trigger the lighting procedure. Otherwise, under high voltage, the impedance element 274 has high impedance or forms an open circuit, so that the current flows through the light-emitting unit 21. This configuration can remain the high performance of the power source.

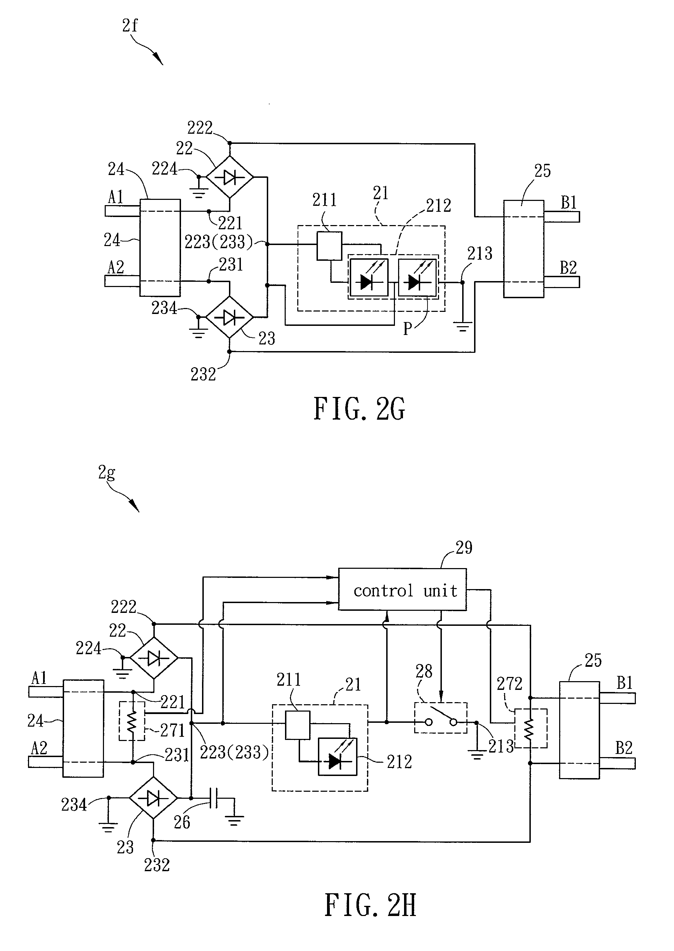

Different from the light emitting apparatus 2, as shown in FIG. 2G, the light emitting apparatus 2f uses a part of the circuit P of the light-emitting unit 21 to simulate the filament. Furthermore, the filament current can drive the light-emitting unit 21 to emit light, thereby increasing the performance of the power source.

The other technical features of the light emitting apparatuses 2a to 2f can be referred to those of the light emitting apparatus 2, so the detailed descriptions thereof will be omitted.

FIG. 2H is a circuit diagram showing a light emitting apparatus 2g of another aspect of the invention.

Compared with the light emitting apparatus 2c of FIG. 2D, the light emitting apparatus 2g further includes a switch unit 28 connected with the light-emitting unit 21 in series. When the first electrical connection element 24 and the second electrical connection element 25 simultaneously receive the external power AC (not shown), the switch unit 28 is turned on. In other words, when the external power AC is connected to both of the first electrical connection element 24 and the second electrical connection element 25, the switch unit 28 is turned on to light on the light-emitting unit 21. In this case, the switch unit 28 can be, for example but not limited to, an electronic switch (e.g. a transistor or a photo coupler) or a mechanical switch (e.g. a relay). The purpose of configuring the switch unit 28 is to turn on the light emitting apparatus 2g only when the first electrical connection element 24 and the second electrical connection element 25 are both inserted into the sockets of the lamp base. If only one electrical connection element is inserted into the socket of the lamp base, the electricity leakage of the other electrical connection element of the light emitting apparatus 2g will be prevented, thereby protecting the installation personnel from electric shock. After the light-emitting unit 21 is lighted on, the switch unit 28 is continuously turned on so as to form a self-latched loop.

The light emitting apparatus 2g may further include a control unit 29 electrically connected with the light-emitting unit 21. The control unit 29 controls the switch unit 28 according to the lighting status of the light-emitting unit 21. In other words, when the control unit 29 detects out that the external power AC is connected to the first electrical connection element 24 and the second electrical connection element 25, it controls to turn on the switch unit 28. Otherwise, when the control unit 29 detects out that the light-emitting unit 21 is lighted on, for example, by detecting the cross voltage, current, or luminance of the light-emitting unit 21, it controls to latch the switch unit 28 in the turn-on state so that the light-emitting unit 21 is remained in the light-on state. When the input power is removed from the light emitting apparatus 2g, the light-emitting unit 21 is lighted off and the switch unit 28 is turned off (open circuit) at the same time.

The other technical features of the light emitting apparatus 2g can be referred to those of the light emitting apparatus 2c, so the detailed descriptions thereof will be omitted.

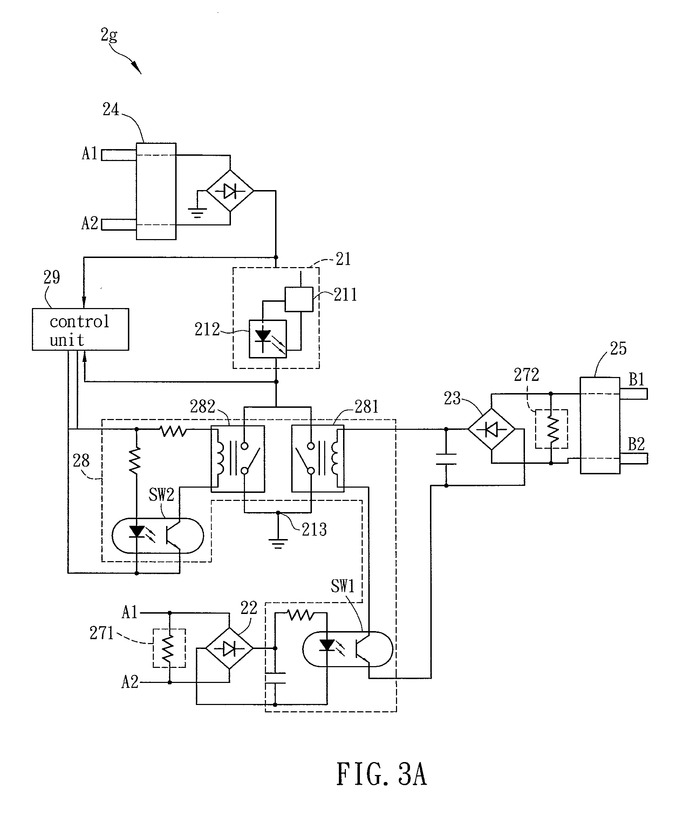

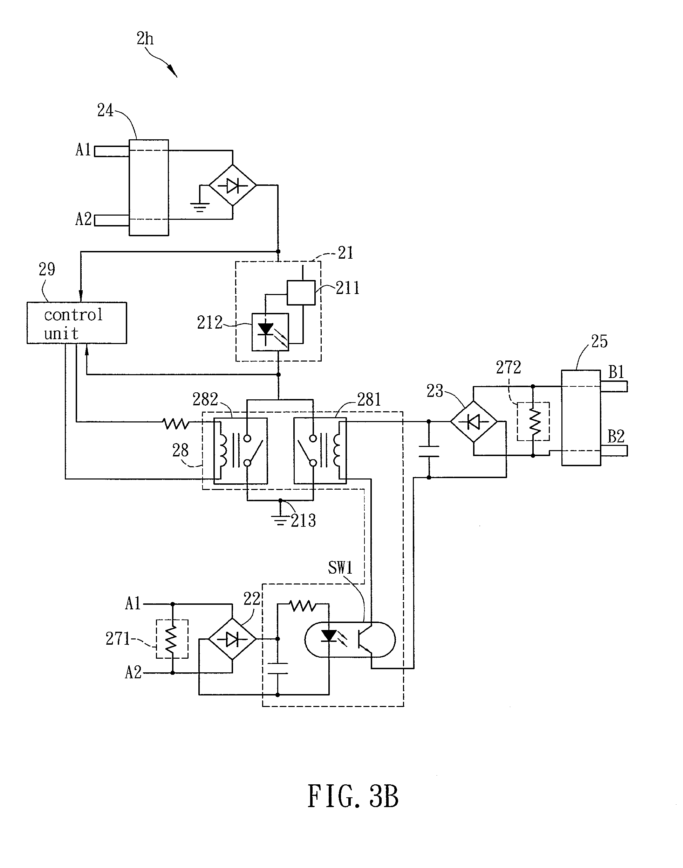

To be noted, in practice, the switch unit 28 can have different circuit structures based on the requirement of product or consideration of design. The various aspects of the switch unit 28 will be described hereinafter with reference to FIGS. 3A and 3B.

Referring to FIG. 3A, the switch unit 28 of this embodiment includes switches 281, 282, SW1 and SW2. In this case, the switches 281 and 282 are relays, and each of the switches SW1 and SW2 includes a photo coupler. Alternatively, in other aspects, the switches 281 and 282 may include other type switches such as transistors or photo couplers, and the switches SW1 and SW2 may also include other type switches such as transistors or relays. To be noted, the invention is not limited to the above aspect. The relay and photo coupler both have the advantages of good electrical isolation and noise interference prevention.

When the first electrode A1 and the second electrode A2 of the first electrical connection element are connected to the external power, the switch SW1 (e.g. a photo coupler) is turned on, and when the first electrode B1 and the second electrode B2 of the second electrical connection element are connected to the external power, so that the switch 281 of the switch unit 28 is in a conductive state, thereby allowing the current to flow through the light-emitting unit 21 via the first electrodes A1 and B1 so as to light on the light-emitting unit 21. At the same time, the control unit 29 can detect the cross voltage of the light-emitting unit 21, so that the control unit 29 controls to turn on the switch SW2 (e.g. another photo coupler). Accordingly, another switch 282 of the switch unit 28 will be turned on to form a self-latched loop.

FIG. 3B shows another circuit structure of the switch unit 28.

Different from the light emitting apparatus 2g, the switch unit 28 of the light emitting apparatus 2h is not configured with the switch SW2. The other technical features of the light emitting apparatus 2h are the same as those of the light emitting apparatus 2g, so the detailed descriptions are omitted.

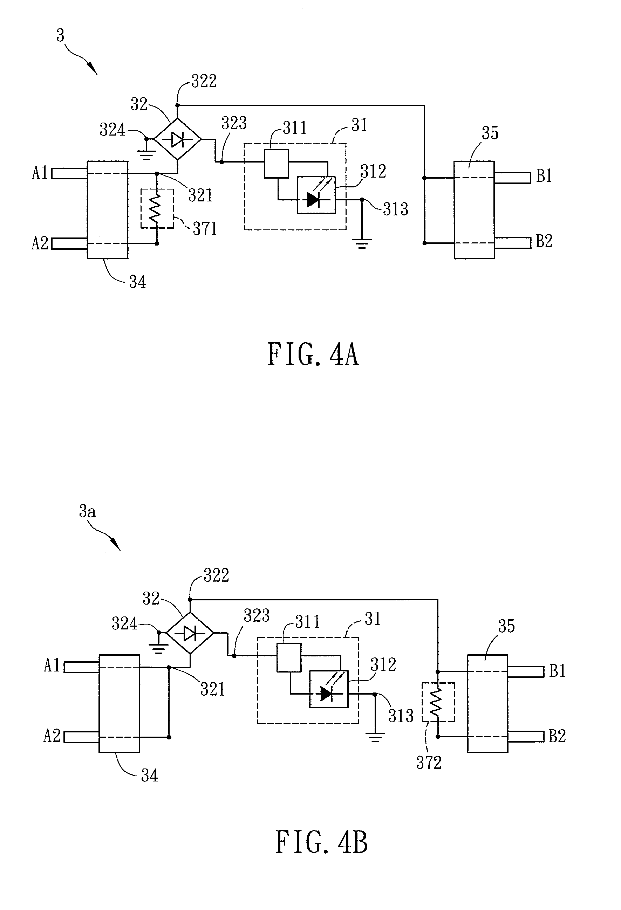

FIG. 4A is a circuit diagram of a light emitting apparatus 3 according to another preferred embodiment of the invention.

The light emitting apparatus 3 receives an external power and includes a light-emitting unit 31, at least one rectifier 32, a first electrical connection element 34, a second electrical connection element 35, and at least one impedance element.

The light-emitting unit 31 includes a light-emitting module 312 and a control module 311. The light-emitting module 312 comprises a plurality of LEDs, which can be connected in series, in parallel or in both series and parallel. To be noted, although the drawings only show a single LED, the actual light-emitting module 312 may include a plurality of LEDs in application. The control module 311 and the light-emitting module 312 can be connected in series or in parallel. Alternatively, parts of the control module 311 and the light-emitting module 312 are connected in series, and the other parts of them are connected in parallel. The control module 311 may detect the voltage of the node between the LEDs of the light-emitting module 312, the parameter representing the illumination status of the light-emitting module 312, or the operation status of the light-emitting module 312 and the illumination status of the light-emitting unit 31, so as to turn on different numbers of the LEDs. Accordingly, it is possible to increase the efficiency of the input power.

The rectifier 32 includes a first input terminal 321, a second input terminal 322, an output terminal 323, and a ground terminal 324. The output terminal 323 is electrically connected with the light-emitting unit 31. In this embodiment, only one rectifier 32 is configured, and the rectifier 32 is a bridge rectifier.

The first electrical connection element 34 is electrically connected with the external power and the first output terminal 321, and the second electrical connection element 35 is electrically connected with the external power and the second output terminal 322. In this embodiment, the first electrode A1 of the first electrical connection element 34 is electrically connected with the first input terminal 321, and the first electrode B1 and the second electrode B2 of the second electrical connection element 35 are both electrically connected with the second output terminal 322. Besides, the first electrode B1 and the second electrode B2 are electrically connected with each other.

At least one impedance element is electrically connected with two electrical input terminals of the first electrical connection element 34 or two electrical input terminals of the second electrical connection element 35. Alternatively, the impedance element may be electrically connected with the output terminal 323 and a ground terminal of the rectifier 32. In this embodiment, only one impedance element is configured. Besides, the impedance element 371 is electrically connected with two electrical input terminals (the first electrode A1 and the second electrode A2) of the first electrical connection element 34. Of course, in other embodiments, it is possible to configure two impedance elements, which are respectively electrically connected with two electrical input terminals of the first electrical connection element 34 and two electrical input terminals of the second electrical connection element 35. If two impedance elements are configured, one of them is electrically connected with two electrical input terminals of the first electrical connection element 34, while the other one is electrically connected with two electrical input terminals of the second electrical connection element 35. The impedance element may be a variable impedance element, a partial or entire circuit of the light-emitting unit 31, a partial or entire circuit of the rectifier 32, or an AC LED module. In addition, the light emitting apparatus 3 further includes at least one filtering element (not shown). On end of the filtering element is electrically connected with the output terminal 323, and the other end thereof is grounded.

The light emitting apparatus 3 of the embodiment uses the impedance element 371 to simulate the filament. When the emitting apparatus 3 is turned on, the impedance element 371 can simulate the starting operation of the conventional filament. The current loops of the filament (the impedance element 371) and the lamp can be referred to the above-mentioned light emitting apparatus, so the detailed descriptions thereof are omitted. To be noted, this embodiment configures only one rectifier 32 and one impedance element 371, so that if the light emitting apparatus 3 is installed on the conventional lamp base and can not be normally lighted on, it is possible to change the installation positions of the first electrode A1 and the second electrode A2 for normally lighting on the light emitting apparatus 3. In other words, the tube of the light emitting apparatus 3 is rotated for 180 degrees along the longitudinal direction. This operation can switch the first electrode A1 to the other position that is originally installed with the second electrode B2, and switch the second electrode A2 to the other position that is originally installed with the first electrode B1. At the same time, the first electrode B1 is switched to the other position that is originally installed with the second electrode A2, and the second electrode B2 is switched to the other position that is originally installed with the first electrode A1.

FIG. 4B is a circuit diagram showing a light emitting apparatus 3a of another aspect.

Different from the light emitting apparatus 3, the impedance element 372 of the light emitting apparatus 3a is electrically connected with two electrical input terminals (the first electrode B1 and the second electrode B2) of the second electrical connection element 35.

The light emitting apparatus 3a of the embodiment uses the impedance element 372 to simulate the filament. When the emitting apparatus 3a is turned on, the impedance element 372 can simulate the starting operation of the conventional filament. Similar to the light emitting apparatus 3, when the light emitting apparatus 3a can not be normally lighted on, it is possible to fix this problem by changing the positions of the first and second electrodes of the electrical connection element 34 or 35. Besides, the current loops of the filament (the impedance element 372) and the lamp can be referred to the above-mentioned light emitting apparatus, so the detailed descriptions thereof are omitted.

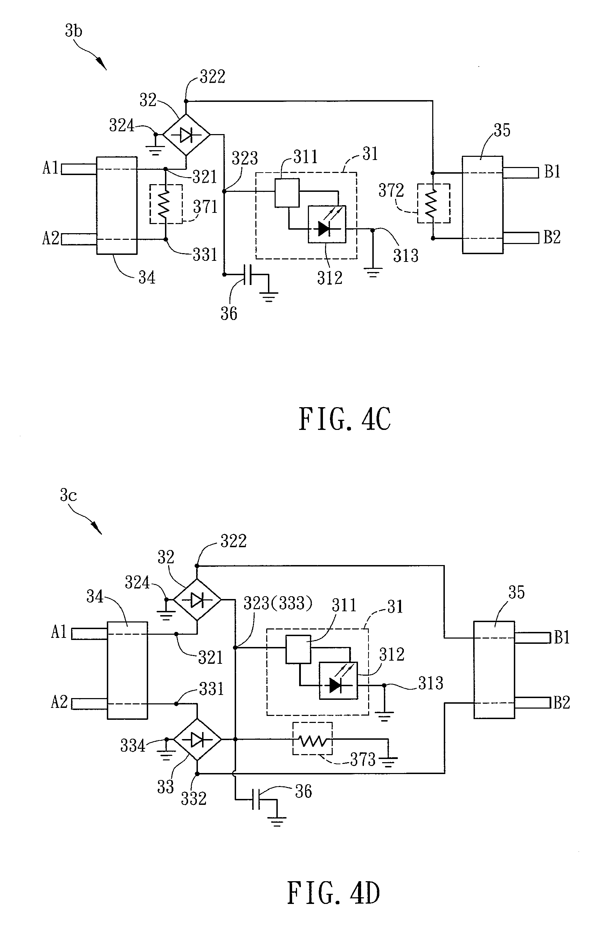

FIG. 4C is a circuit diagram showing a light emitting apparatus 3b of another aspect.

Different from the light emitting apparatus 3, the light emitting apparatus 3b further includes an impedance element 372 electrically connected with two electrical input terminals (the first electrode B1 and the second electrode B2) of the second electrical connection element 35. In addition, the light emitting apparatus 3b may further include at least one filtering element 36. One end of the filtering element 36 is electrically connected with the output terminal 323, and the other end thereof is grounded. Herein, the filtering element 36 is configured to filter the power supplied to the light-emitting unit 31.

FIG. 4D is a circuit diagram showing a light emitting apparatus 3c of another aspect.

Different from the light emitting apparatus 3 of FIG. 4A, the light emitting apparatus 3c includes two rectifiers 32 and 33, which respectively include the first input terminals 321 and 331, the second input terminals 322 and 332, a common output terminal 323 (333), and the ground terminals 324 and 334. The output terminal(s) 323 (333) are electrically connected with the light-emitting unit 31. In addition, the light emitting apparatus 3c includes an impedance element 373, which is a resistor. One end of the impedance element 373 is electrically connected with the output terminal 323 (333) and the other end thereof is grounded. The light emitting apparatus 3c of the embodiment uses the impedance element 373 to simulate the filament. The current loops of the filament and the lamp can be referred to the above-mentioned light emitting apparatus 2d of FIG. 2E, so the detailed descriptions thereof are omitted.

The other technical features of the light emitting apparatuses 3, 3a, 3b and 3c can be referred to those of the light emitting apparatus 2, so the detailed descriptions thereof will be omitted.

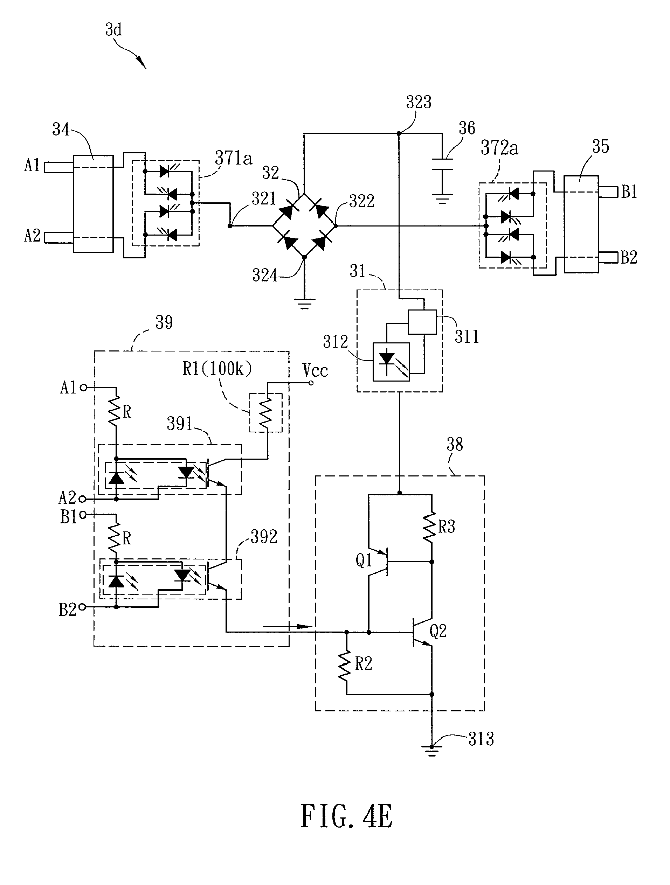

FIG. 4E is a circuit diagram showing a light emitting apparatus 3d of another aspect.

Different from the light emitting apparatus 2g of FIG. 3A, the light emitting apparatus 3d includes only one rectifier 32 (e.g. a bridge rectifier), which includes the first input terminal 321 electrically connected with an AC LED module 371 a and a second input terminal 322 electrically connected with an AC LED module 372a. The first electrical connection element 34 is electrically connected with the external power and the AC LED module 371a, and the second electrical connection element 35 is electrically connected with the external power and the AC LED module 372a. The configurations of the AC LED modules 371a and 372a allow the bridge rectifier to receive the AC power source from the first electrode A1 and the second electrode A2 of the electrical connection element 34 and from the first electrode B1 and the second electrode B2 of the electrical connection element 35. This can prevent the situation of unable to receive the external power as the light emitting apparatus 3d is installed at different direction.

In this embodiment, the AC LED modules 371a and 372a can serve as two impedance elements of the light emitting apparatus 3d. The AC LED module 371a is electrically connected between the first electrode A1 and the second electrode A2 of the first electrical connection element 34, and the AC LED module 372a is electrically connected between the first electrode B1 and the second electrode B2 of the second electrical connection element 35. Each of the AC LED modules 371a and 372a has four LEDs. As shown in FIG. 4E, in each of the AC LED modules 371 a and 372a, two reversely connected LEDs are serially connected with the other two reversely connected LEDs. To be noted, the number of the LEDs configured in the AC LED modules 371a and 372a (two impedance elements) are not limited and may be greater or less than 4.

The AC LED module 371a is electrically connected with the electrodes A1 and A2 of the first electrical connection element 34 directly, and the AC LED module 372a is electrically connected with the electrodes B1 and B2 of the second electrical connection element 35 directly, so that the LEDs of the AC LED modules 371a and 372a are directly driven by AC power. Accordingly, when the inputted external power is at a positive half-cycle, two forward-biased LEDs of the AC LED modules 371a and 372a (e.g. the first and fourth LEDs of the AC LED modules 371a (counted from top to bottom)) are conducted, and two reverse-biased LEDs of the AC LED modules 371a and 372a (e.g. the second and third LEDs AC LED modules 371a (counted from top to bottom)) are not conducted. Otherwise, when the inputted external power is at a negative half-cycle, two forward-biased LEDs of the AC LED modules 371a and 372a (e.g. the second and third LEDs of the AC LED modules 371a (counted from top to bottom)) are conducted, and two reverse-biased LEDs of the AC LED modules 371a and 372a (e.g. the first and fourth LEDs AC LED modules 371a (counted from top to bottom)) are not conducted. The light emitting apparatus 3d uses the AC LED modules 371a and 372a to simulate the filament. Thus, the light emitting apparatus 3d configured with the AC LED modules 371a and 372a (impedance elements) can directly replace the fluorescent lamp with the conventional ballast without removing the starter and ballast or changing the circuit of the lamp.

In addition, the switch unit 38 of the light emitting apparatus 3d is a circuit containing transistors Q1 and Q2. In specific, the switch unit 38 of the light emitting apparatus 3d is a circuit configured with two transistors Q1, Q2 and two resistors R2, R3. In this aspect, when the first electrode A1 and the second electrode A2 of the first electrical connection element 34 are connected to the external power (not shown), the switch 391 (photo coupler) is turned on. At the meantime, if the first electrode B1 and the second electrode B2 of the second electrical connection element 35 are also connected to the external power (not shown), the switch 392 (photo coupler) is also turned on. Accordingly, the current generated by the voltage Vcc can flow through the resistor R1, the switch 391 and the switch 392, and then into the base of the transistor Q2 of the switch unit 38, so that the switch unit 38 is conducted to light on the light-emitting unit 31. After the switch unit 38 is conducted, the transistor Q2 can provide the base current for the transistor Q 1, and the transistor Q1 can provide the base current for the transistor Q2. In other words, the switch unit 38 is in a self-latched conducting status until the external power is removed.

After the light-emitting unit 31 starts to emit light, the switch unit 38 can be continuously conducted according to the inherent circuit property. Even if the control unit 39 never outputs the signal to the switch unit 38 again, the switch unit 38 can be still in the conductive status due to the circuit property of the transistors Q1 and Q2 so as to form a self-latched loop. In other words, only when the first electrical connection element 34 and the second electrical connection element 35 are both inserted into the sockets of the lamp base, the light-emitting unit 31 can then be lighted on. If only one of the electrical connection elements is inserted into the sockets, the light-emitting unit 31 can not be lighted on. This configuration can protect the installation personnel from electric shock when installing the light emitting apparatus 3d. To be noted, the switch unit 38 can be replaced by an SCR (silicon-controlled rectifier).

The other technical features of the light emitting apparatuses 3d can be referred to those of the light emitting apparatus 2g, so the detailed descriptions thereof will be omitted.

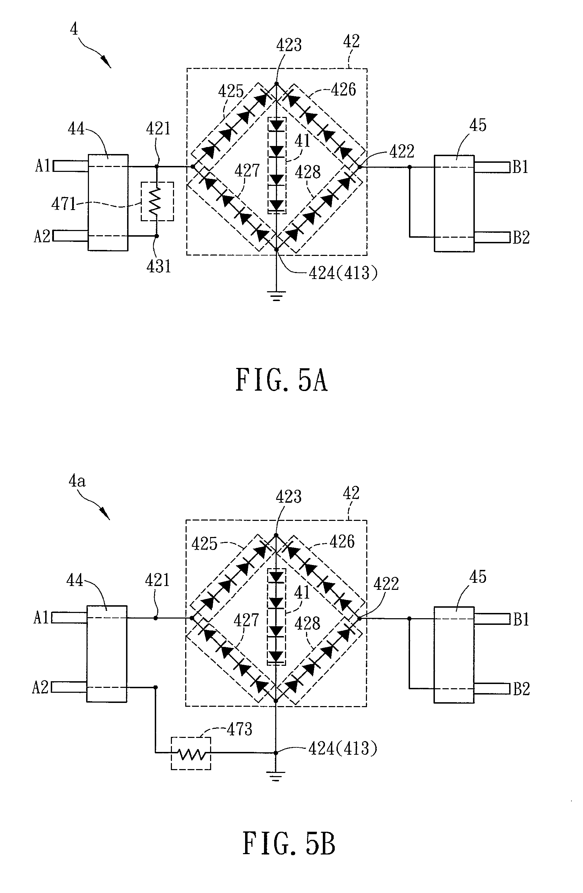

FIG. 5A is a circuit diagram showing a light emitting apparatus 4 of another aspect.

Different from the light emitting apparatus 3 of FIG. 4A, the light-emitting unit 41 of the light emitting apparatus 4 has a plurality of LEDs connected in series. In this case, the light-emitting unit 41 has 4 LEDs connected in series. To be noted, the number and connection type of the LEDs are not limited to this example. In addition, the rectifier 42 includes four sets of LED modules 425-428 connected in series or in parallel. In this case, the LED modules 425-428 are connected in series and in bridge, so that the rectifier 42 is configured as an AC LED module.

When the inputted external power is at a positive half-cycle, the current loop of the lamp includes the first electrode A1 of the first electrical connection element 44, the LED module 425, the light-emitting unit 41, the LED module 428 and the first electrode B1 of the second electrical connection element 45. When the inputted external power is at a negative half-cycle, the current loop of the lamp includes the first electrode A1 of the first electrical connection element 44, the LED module 427, the light-emitting unit 41, the LED module 426 and the first electrode B1 of the second electrical connection element 45. Accordingly, the light-emitting unit 41 can be lighted on. To be noted, the light-emitting unit 41 is shown in the rectifier 42, but the rectifier 42 is not substantially containing the light-emitting unit 41.

The simulated filament current loop of the light emitting apparatus 4 can be referred to the light emitting apparatus 3, so the detailed descriptions are omitted.

FIGS. 5B to 5E are circuit diagrams showing light emitting apparatuses of different aspects.

Different from the light emitting apparatus 4 of FIG. 5A, the impedance element 473 of the light emitting apparatus 4a of FIG. 5B is electrically connected between the second electrode A2 of the first electrical connection element 44 and the ground terminal 424 (413). The simulated filament current loop of the light emitting apparatus 4a can be referred to the light emitting apparatus 2d, so the detailed descriptions are omitted.

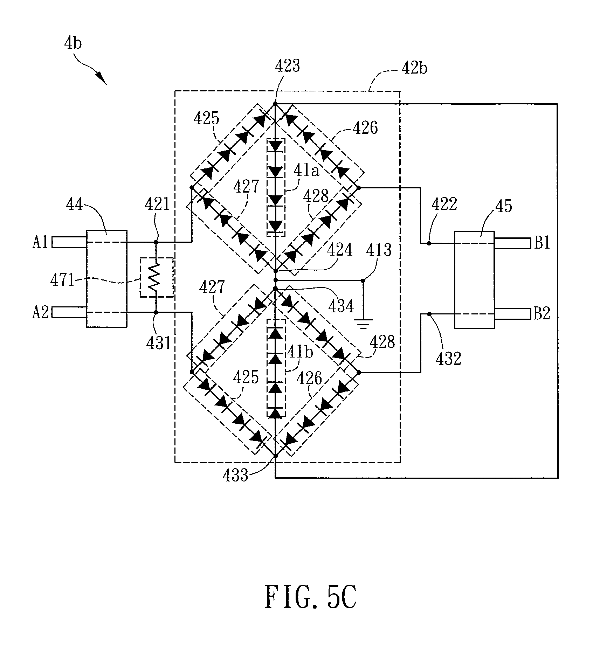

Different from the light emitting apparatus 4 of FIG. 5A, the rectifier 42b of the light emitting apparatus 4b of FIG. 5C includes two sets of LED modules 425-428 connected in bridge, which are electrically connected via the ground terminals 424 and 434. Two of the LED modules 425-428 are respectively electrically connected to the light-emitting units 41a and 41b. The connection method of the rectifier 42b and the light-emitting units 41a and 41b is shown as FIG. 5C. In addition, the simulated filament current loop of the light emitting apparatus 4b can be referred to the light emitting apparatus 3, so the detailed descriptions are omitted.

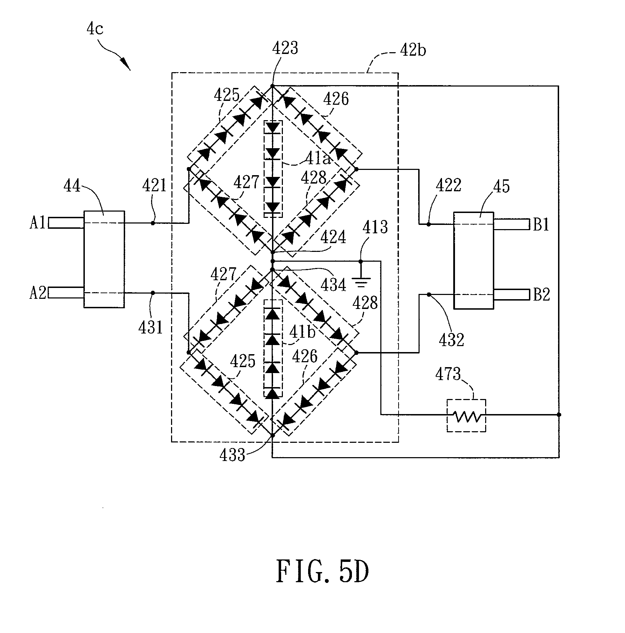

Different from the light emitting apparatus 4b of FIG. 5C, the impedance element 473 of the light emitting apparatus 4c of FIG. 5D is electrically connected to the output terminals 423, 433 and ground terminal 413 of the light-emitting units 41a, 41b. The simulated filament current loop of the light emitting apparatus 4c includes the first electrode A1 of the first electrical connection element 44, the LED module 425 of the top bridge, the impedance element 473, the LED module 427 of the bottom bridge, and the second electrode A2 of the first electrical connection element 44. Otherwise, the simulated filament current loop of the light emitting apparatus 4c may include the second electrode A2 of the first electrical connection element 44, the LED module 425 of the bottom bridge, the impedance element 473, the LED module 427 of the top bridge, and the first electrode A1 of the first electrical connection element 44.

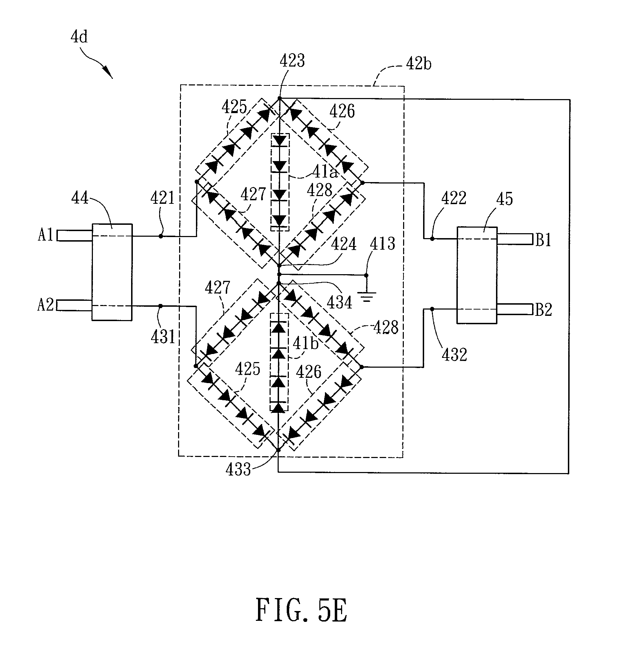

Different from the light emitting apparatus 4b of FIG. 5C, the light emitting apparatus 4d of FIG. 5E uses the entire circuit of the light-emitting unit 41a or 41b to simulate the filament. The simulated filament current loop of the light emitting apparatus 4d includes the first electrode A1 of the first electrical connection element 44, the LED module 425 of the top bridge, the light-emitting unit 41a, the LED module 427 of the bottom bridge, and the second electrode A2 of the first electrical connection element 44. Otherwise, the simulated filament current loop of the light emitting apparatus 4d may include the second electrode A2 of the first electrical connection element 44, the LED module 425 of the bottom bridge, the light-emitting unit 41b, the LED module 427 of the top bridge, and the first electrode A1 of the first electrical connection element 44. To be noted, each of the light emitting apparatuses 4a, 4b, 4b and 4d may further include another impedance element (not shown), which has two ends electrically connected with the first electrode B1 and the second electrode B2 of the second electrical connection element.

In addition, the simulated filament current loop of each of the light emitting apparatus 4a, 4b, 4b and 4d can be referred to the light emitting apparatus 4, so the detailed descriptions are omitted.

In summary, the light emitting apparatus of the invention is a LED lamp, which is not configured with the filament of the conventional fluorescent lamp. The light emitting apparatus has the internal elements for simulating the filament, so that the starter and ballast of the conventional fluorescent lamp can still operate normally, and the light emitting apparatus is turned on normally. Compared with the conventional art, when the conventional fluorescent lamp is replaced by the light emitting apparatus of the invention, it is possible to prevent the traditional ballast from being burned, or to avoid the procedure of removing the electronic ballast and changing the original circuit. Therefore, as the light emitting apparatus of the invention is installed on the conventional fluorescent lamp base, it can directly replace the conventional fluorescent lamp tube without changing the circuit of the lamp base.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A light emitting apparatus for receiving an external power, comprising:
a light-emitting unit;
at least one rectifier and preferably two rectifiers, each of which has a first input terminal, a second input terminal, an output terminal and a ground terminal, wherein the output terminals are electrically connected together and are electrically connected with the light-emitting unit;
a first electrical connection element electrically connected with the external power and the first input terminal(s); and
a second electrical connection element electrically connected with the external power and the second input terminal(s).

2. The light emitting apparatus of claim 1, wherein the first electrical connection element has two electrical input terminals, and the second electrical connection element has two electrical input terminals.

3. The light emitting apparatus of claim 2, wherein the external power is applied to the electrical input terminals of the first electrical connection element and the second electrical connection element.

4. The light emitting apparatus of any of the preceding claims, wherein the light-emitting unit has a light-emitting module and a control module, the light-emitting module comprises a plurality of LEDs, and the control module controls the number of the LEDs of the light-emitting module to be turned on.

5. The light emitting apparatus of any of the preceding claims, wherein each of the rectifiers is a bridge rectifier.

6. The light emitting apparatus of claim 2, further comprising:
at least an impedance element electrically connected with the two electrical input terminals of the first electrical connection element or the second electrical connection element.

7. The light emitting apparatus of claim 6, wherein when the number of the impedance elements is two, one of the impedance elements is electrically connected with the two electrical input terminals of the first electrical connection element, and the other one of the impedance elements is electrically connected with the two electrical input terminals of the second electrical connection element.

8. The light emitting apparatus of any of the preceding claims, further comprising:
at least an impedance element having one end electrically connected with the output terminals, and another end electrically connected with the ground terminal.

9. A light emitting apparatus for receiving an external power, comprising:
a light-emitting unit;
at least one rectifier having a first input terminal, a second input terminal, an output terminal and a ground terminal, wherein the output terminal is electrically connected with the light-emitting unit;
a first electrical connection element having two electrical input terminals and electrically connected with the external power and the first input terminal;
a second electrical connection element having two electrical input terminals and electrically connected with the external power and the second input terminal; and
at least one impedance element electrically connected with the two electrical input terminals of the first electrical connection element or the second electrical connection element, or electrically connected with the output terminal and the ground terminal.

10. The light emitting apparatus of claim 9, wherein the external power is applied to the electrical input terminals of the first electrical connection element and the second electrical connection element.

11. The light emitting apparatus of claim 9 or 10, wherein the light-emitting unit has a light-emitting module and a control module, the light-emitting module comprises a plurality of LEDs, and the control module controls the number of the LEDs of the light-emitting module to be turned on.

12. The light emitting apparatus of any of claims 9 to 11, wherein the rectifier is a bridge rectifier.

13. The light emitting apparatus of any of claims 9 to 12, wherein when the number of the impedance elements is two, one of the impedance elements is electrically connected with the two electrical input terminals of the first electrical connection element, and the other one of the impedance elements is electrically connected with the two electrical input terminals of the second electrical connection element.

14. The light emitting apparatus of any of claims 9 to 13, wherein the impedance element is a variable impedance element, a partial or entire circuit of the light-emitting unit, a partial or entire circuit of the rectifier, or an AC LED module.

15. The light emitting apparatus of any of the preceding claims, further comprising:
a switch unit connected with the light-emitting unit in series, wherein when the first electrical connection element and the second electrical connection element receive the external power, the switch unit is turned on.

16. The light emitting apparatus of claim 15, wherein when the light-emitting unit is lighted on, the switch unit is continuously turned on.

17. The light emitting apparatus of claim 15 or 16, further comprising:
a control unit electrically connected with the light-emitting unit for controlling the switch unit according to the lighting status of the light-emitting unit.

18. The light emitting apparatus of any of the preceding claims, wherein the light-emitting unit or the rectifier comprises an AC LED module.
